# EUROPEAN PATENT APPLICATION

(11) **EP 3 662 752 A1**
(43) Date of publication of application: **10.06.2020**
(21) Application number: 18209834.3
(22) Date of filing: 03.12.2018
(51) Int. Cl.: A01N 65/00

(54) **BIOSTIMULANT FOR PLANTS OBTAINED FROM ROOT EXUDATES ACCUMULATED IN RECIRCULATED HYDROPONIC ENVIRONMENTS**

(71) Applicant: Institutul National de Cercetare-Dezvoltare Pentru Chimie si Petrochimie-Icehim, 060021 Bucharest (RO)
(72) Inventor: OANCEA, Florin, 062082 Bucuresti (RO); CONSTANTINESCU-ARUXANDREI, Diana, 030306 Bucuresti (RO)
(74) Representative: Teodorescu, Mihaela

(57) **Abstract**

This invention relates to a plant biostimulant with role of modulating the plant response to stress, realized based on selectively recovered bioactive components from root exudates accumulated in recirculated hydroponic media. The plant biostimulant obtained from root exudates accumulated in recirculated hydroponic media according to the invention has a content of 0.25% non-ionic surfactants and hydrophobic bioactive components, selectively recovered from root exudates based on a process of micellar enhanced tangential ultrafiltration, in which the non-ionic amphiphilic structures have also a formulation role of the recovered hydrophobic bioactive components.

## Description

This invention relates to a plant biostimulant with role of modulating the plant response to stress, based on selectively recovered bioactives from root exudates accumulated in recirculated hydroponic media.

There are several known compositions that are produced based on root exudates of plants grown in hydroponics and/or based on some of their bioactive compounds. These bioactive compounds from root exudates have several properties, being anti-microbian, anti-inflammatory, anti-oxidant, analgesics / anti-nociceptive, with role of accelerating wound healing (Lica et al. 2018, Food Research International, 105, 1039-1053) or exo-signals (semio-chemicals), involved in the molecular dialogue of partners specific to rhizosphere interactions, cultivated plants (roots) - beneficial (micro)organisms - pathogenic (micro)organisms (Sasse et al. 2018, Trends in Plant Science, 23, 25-41; Venturi si Keel, 2016. Trends in Plant Science, 21, 187-198).

Patent US6615537 B2 refers to a process of modifying the growth of plants roots, which can also be used to collect the extracted compounds from the root plants by growing the root plants in a growth medium surrounded by a membrane. The membrane is a hydrophilic membrane without pores, through which the water is removed by pervaporation, or a hydrophobic porous membrane through which the water passes. The process allows the retaining of root exudates as a concentrated form, but these root exudates need further processing to use the bioactive compounds. The patent does not claim products obtained based on root exudates obtained by this process.

The patent application WO2007088024 A1 describes a process of obtaining at least one glucosinolate from root exudates of plants from the order *Capparales,* to be used as a raw material for nutritional or pharmaceutical supplements, which implies the following steps: (a) the plant is cultivated in a system without a solid substrate; (b) a nutritive solution with a high nitrogen content is provided; (c) the formation of glucosinolate is stimulated by administration of at least one elicitor; (d) the glucosinolate is obtained from the root exudate of the plant. The disadvantage of this process is given by the fact that it implies the cultivation of plants only with the major scope of producing exudates. The process implies a series of steps through which the production of exudates is stimulated (nutritive solutions with a high nitrogen content), and also the activation of the secondary metabolism and formation of glucosinolates, which are not compatible with plants grown for being harvested and freshly consumed - as it is for example the medium with high nitrogen content, which can lead to accumulation of nitrites / nitrates in the cultivated vegetables (e.g., broccoli or kale, plants from the order *Capparales,* which are cultivated in hydroponics during the first stages of vegetation, as super-foods).

The process described cannot be applied to the recovery of bio-active ingredients from the cultivation media of commercial greenhouses with closed hydroponic systems, for production of fresh vegetables for consumption. These closed hydroponic systems, which have a high efficiency of water and nutrients utilization, need anyway special systems for exudates treatment, to avoid a series of negative phenomena, such as autotoxicity or stimulation of phytopathogens (Hosseinzadeh et al. 2017, Reviews in Environmental Science and Bio/Technology, 16, 59-79). The recovery of beneficial components from plant exudates dispersed in the hydroponic media would valorize a resource neglected until now and would increase the profitability of hydroponic greenhouses as recirculated medium. The utilization of these beneficial components as active ingredients for new products used as inputs in plant cultivation technologies would open new perspectives for the development of this field.

The patent application CN108444766 A presents an installation for treatment of hydroponic plant cultivation media, which includes a column filled with ionic exchange resin XAD-4 for retaining the organic components, and a sand layer for retaining the mucilage produced by plant roots. The neutral resin XAD-4 retains mostly the hydrophilic components from the root exudates, such as saccharides, organic acids and/or amino acids (Li et al. 2015, Journal of Plant Nutrition and Soil Science 178, 963-975). The organic acids are involved both in the autotoxicity of recycled hydroponic solutions and in stimulation of phytopathogens (Hosseinzadeh et al. 2017, Reviews in Environmental Science and Bio/Technology, 16, 59-79), and their removal is beneficial for closed hydroponic systems. Nevertheless, the proposed installation and the respective process do not allow the selective concentration from the root exudates, of bioactive hydrophobic components with exo-signal role, implied in the molecular dialogue between the plant roots and the (micro)organisms from rhizosphere.

These bioactive hydrophobic components with exo-signal role are extremely important for the development of cultivated plants. The bioactive components with exo-signal role are semio-chemicals, chemical compounds that transmit Information in rhizosphere, i.e. the space delimited by plant roots, which represents a preferred habitat for the (micro)organisms associated to plants (Zhang, et al 2015. Current Opinion in Biotechnology, 32, 136-142). These semio-chemicals, also named infochemicals, are of several categories, of interest for rhizosphere being kairomones, chemical signals that are beneficial for the receiver and harmful for the emitter, and synomones, chemical signals beneficial for both the emitter and the receiver (Dicke and Sabelis, 1988, Functional Ecology, 2, 131-139).

For example, the nitrogen-fixing symbionts, important for sustainable cultivation of leguminous plants, which provide proteins to the food chain and nitrogen fixation to soil (Jensen et al. 2012. Agronomy for Sustainable Development, 32, 329-364), imply a dialogue between the plant roots and rhizobia, mediated by hydrophobic flavonoides (produced by plant roots) and by the mitogenic specific factor **Nod,** of lipochitooligosaccharide nature, produced by rhizobia (Cooper, 2007, Journal of Applied Microbiology, 103, 1355-1365). The arbuscular mycorrhizal fungi, essential for the mobilization of phosphorus and of micro-elements from soil, also produce a mitogenic lipochitooligosaccharide factor, with a structure similar to that of Nod, named factor **Myc** (Maillet et al. 2011, Nature, 469, 58-63). The biological activity of semiochemicals / infochemicals of synomones type is defined by the hydrophobic side at these amphiphilic compounds, for which specific kinases with functions similar to receptors have been identified (Malkov et al. 2016, Biochemical Journal, 473, 1369-1378). Another example of hydrophobic bioactive compounds with exo-signal role is that of strigolactones, a group of carotenoid derivatives / highly hydrophobic sequiterpenic lactones, produced by plant roots, which stimulate the germination of mycorrhizae spores, with ramification of hyphae (Akiyama et al. 2005, Nature, 435, 824-827), change the pattern of development and ramification of phytopathogenic fungi (Dor et al. 2011, Planta, 234, 419-427) and favor the formation of nitrogen-fixing nodules on the roots of legumes (Soto et al. 2010, Soil Biology and Biochemistry, 42, 383-385). In the same time, the strigolactones are perceived also by the seeds of the parasitic plants, as an indicator of the presence of host plants, inducing the germination of the respective plant parasitic plants, at the time favorable for parasitism (Matusova et al. 2005, Plant Physiology, 139, 920-934). Strigolactones have therefore both a role of synomones, being beneficial for both emitter and receiver, and a role of kairomone, harmful for the emitter and beneficial for the receiver (Lopez-Raez et al. 2017, Trends in Plant Science, 22, 527-537).

The cutin monomers, ramified fatty (poly)alcohols, have a role in the formation of mycorrhizae (Murray et al. 2013. Molecular Plant, 6, 1381-1383), in the same time being involved in stimulating the development of appressoria of phytopathogenic oomycetes (Wang et al. 2012, Current Biology, 22, 2242-2246). Also, these cutin monomers have a double role, of synomone and kairomone. Sorgoleone, the major component of the hydrophobic exudates of sorghum plants, are a typical example of allomones, acting as inhibitors of nitrification processes in soil, increasing the efficiency of nitrogen use (Subbarao et al. 2013, Plant and Soil, 366, 243-259), as well as signals involved in allelopathic interactions between plants, with an herbicidal / toxic effect on other plants (Einhellig and Souza, 1992, Journal of Chemical Ecology, 18, 1-11).

Plants secrete compounds that mimic the bacterial N-acyl-homoserin-lactones (Teplitski et al. 2000, Molecular Plant-Microbe Interactions, 13, 637-648), hydrophobic bioactive components with exo-signal role, involved in the communication within the microbial communities and in the concerted regulation of gene expression / *quorum sensing* (Fuqua et al. 2001, Annual Review of Genetics, 35, 439-468). The sensing by plants of N-acyl-homoserin-lactones, as an indicator of microorganisms presence / microbe associated molecular pattern (MAMP), determines a series of benefic effects, including the priming of the plant defense system (Schikora et al. 2016, Plant Molecular Biology, 90, 605-612).

These hydrophobic bioactive components with exo-signal role, which favor the answer of plants beneficial microorganisms, are useful for the development of the new biostimulants generation, characterized by the synergism of components (Rouphael 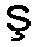 i Colla, 2018, *Frontiers in Plant Science,* **9,** 1655). The plant biostimulants are a new class of products used as inputs in the plants cultivation technologies, which determine: the increase in taking over and use of nutrients by plants, increase resistance to abiotic stress factors and improvement of crop quality (du Jardin, 2015. Scientia Horticulturae, 196, 3-14). The increased interest for plants biostimulants is determined by the fact that this new class of agricultural inputs assures a sustainable intensification of agricultural production under climate change conditions (Calvo et al. 2014, Plant and Soil, 383, 3-41). The plant biostimulants are classified in two main categories: microbial (e.g. inoculants - *Azotobacter* spp., mycorrhizal fungi, *Rhizobium* spp., *Azospirillum* spp.) and non-microbial, organic ("containing only carbon of animal or vegetal origin") and inorganic - especially benefic elements such as soluble silica / silicic acid (COM (2016) 157, proposal of Regulation related to EC fertilizers). The bioactive components with exo-signal roles involved in the molecular dialogue within the rhizosphere, between plant roots and beneficial and harmful microorganisms, represent an integrative class of non-microbial, organic biostimulants, which favor the response of plants benefic microorganisms, such as mycorrhiza- included in the microbial biostimulants class.

Several compositions of plant biostimulants have been already presented, which include bioactive components with exo-signal role within rhizosphere, either alone, as non-microbial biostimulants, or together with beneficial microorganisms from rhizosphere, considered as microbial biostimulants. A short enumeration, which is not comprehensive, is presented next, with the scope of exemplifying the applicative potential of the hydrophobic bioactive components with exo-signal role from rhizosphere. Lipo-chito-oligosaccharides (LCO) have been claimed as ingredients that stimulate plants, alone (patent EP2358194 B1, Myc factor), or in combination with microbial biostimulants - *Bacillus amyloliquefaciens,* especially strain SB3281, both with LCO factors Nod and Myc (patent application WO2017205258 A1); *Penicillium bilaiae* strains that solubilize phosphorus, NRRL 50162, NRRL 50169, ATCC 20851, ATCC 22348 and/or ATCC 18309 (patent application EP2748123 A1); *Trichoderma virens* GI-320 strain (patent application US 20180235219 A1); beneficial strains / biostimulants *Streptomyces, Trichoderma* or *Bacillus,* optionally pesticides also, for seed treatment (patent application US 20170223956 A1).

Patent US 8101171 B2 relates to the utilization of natural strigolactones, strigol, alectrol, sorgolactone, orobanchol, or their synthetic analogous GR7, GR24, Nijmegen1, dimethylsorgolactone, for the intensification of the symbiotic interaction between the fungi producing endo-mycorrhizae (AM) and cultivated plants. The patent discloses the repetitive application of strigolactones that stimulate / intensify the symbiotic interaction AM - roots of cultivated plant, but it does not exemplify the exact methodology of this repeated application. The patent application WO 2013034621 A1 discloses the use, as furrow treatment or seed treatment, of several acyl-homoserin lactones derivates, to increase the yield of agricultural crops, the chlorophyll content of plants, seeds germination, nutrient up-take and mycorrhizal symbiotic interactions.

Compositions based on analogous or mimetics of strigolactones have been proposed to increase the plant tolerance to stress. As already mentioned, strigolactones are some of the most representative bioactive components with exo-signal role. Strigolactones have been extracted from hydroponic solutions in which plants usually used at large scale for hydroponic crops, tomatoes and salad were cultivated (Yoneyama et al. 2012, Planta, 235, 1197-1207). Their role of increasing the tolerance to stress is due to their double function, as endo-signal, i.e. phytohormone involved in plant adaptation to stress (Mostofa et al. 2018, Plant, Cell & Environment, 41, 2227-2243) and as exo-signal, i.e. regulation of interaction between plants and beneficial microorganisms (Lanfranco et al. 2017, Journal of Experimental Botany, 69, 2175-2188). The patent application US2018220650 (A1) describes a strigolactone analogue based on double substituted butenolide which is more efficient in limiting the hydric stress of corn compared to the strigolactone analogue AB01, monosubstituted butenolide, claimed by patent US9994557 B2. Patent application RO131928 A2 presents the use of strigolactone analogues, with structures 3-metil-5-(2-pirimidin-4-il-fenoxi)-5H-furan-2-on 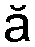 and 3-metil-5-(4-fenilchinazolin-2-il-oxi)-5H-furan-2-on 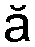 , to amplify the response of plant benefic microorganisms, i.e.: phosphorous solubilization; siderophore production, biosynthesis of compounds with plant growth stimulating effect; release of polyamines and silica with role of increasing the resistance to abiotic stress. Patent application RO RO132514 A2 relates to synthetic compounds, mimetics of strigolactones, the structures of which contain an aromatic cycle or a heteroaromatic linked to a furan-2-one cycle through an oxygen atom or a NH group and which determines effects specific to biostimulants for corn plants and sunflower cultivated on conservation system, i.e.: the increase of nitrogen use efficiency, amplification of tolerance to abiotic stress factors; crop quality improvement.

One disadvantage of these compositions based on synthetic compounds is the impossibility to register them as plant biostimulants. Plant biostimulants are a category of products intended to be used as inputs in technologies of plant cultivation, which must contain carbon only of animal or vegetal origin - COM (2016) 157, proposal of Regulation related to EC fertilizers. This implies that these chemically synthesized products, which have a reduced public acceptance, must fulfill lengthy and costly procedures to proof their safety and efficacy before being approved for placing on the market (Vurro et al. 2016, Pest Management Science, 72, 2026-2034).

One solution which would allow the homologation of products with natural strigolactones/ carbon of vegetal origin, is their recovery from hydroponic media, together with other hydrophobic bioactive components with exo-signal role. Within the hydroponic media, these hydrophobic bioactive components with exo-signal role are usually dispersed at solubility limit, from where they are recovered in very small quantities by extraction with organic solvents (Xie et al. 2019, 157, 200-205). The extraction with organic solvents is not a compatible solution with the recirculation of hydroponic media - the solvent quantities would be very large, the installations for up-scale would be also too big and practically incompatible with the greenhouses that grow plants on recirculated hydroponic media, the traces of organic solvents are potentially phytotoxic, the organic solvents have significant risks - fire risks, work safety risks, environment risks.

Patent US9241454 B2 describes a product based on Myc factors, mixture of sulfated and non-sulfated lipo-chito-oligosaccharides (LCOs), and a process of obtaining it in which the mycorrhizae colonized roots are also used. The process implies extraction of exudates with butanol, recovery of butanol extract containing lipo-chito-oligosaccharides, solid phase extraction on inverse phase C18, with consecutive washes at 20%, 50% and 100% acetonitril and recovery of the eluted fraction at 50% acetonitril containing the Myc factor. In the preferred example, the process includes subsequent steps of applying the eluted fraction on a high performance liquid chromatography, at 50% acetonitril, on a reverse phase column C18, using a linear gradient from 20% to 100% acetonitril, with the recovery of the eluted fraction at 30-48% acetonitril, which contains sulfated lipo-chito-oligosaccharides and/or the fraction eluted at 64-72% acetonitril, which contains non-sulfated lipo-chito-oligosaccharides. The described process in patent US 9241454 B2 uses organic solvents and presents the same disadvantage, already described, of maladjustment as process for recovery of hydrophobic bioactive components with exo-signal role from recirculated hydroponic media.

One efficient process for the recovery of very diluted hydrophobic compounds in aqueous media is that of *Micellar enhanced ultrafiltration* - MEUF (Schwarze, 2017. Environmental Science: Water Research & Technology, 3, 598-624). By this process the hydrophobic compounds diluted in aqueous media are included in micelles formed by amphiphilic surfactants (*micellar extraction*), and the resulted micelles are separated from the aqueous media by ultrafiltration. Processes of micellar enhanced ultrafiltration have been described for water decontamination of hydrophobic pollutants (patent KR100788848 B1, in which amphiphilic nanoparticles of urethane polyacrylate are used) or for the removal of phenols from industrial waters or from contaminated groundwater - Patent US8002988 B2, which use saccharides-based surfactants and n-dodecil-β-D-maltoside. There are no described processes of micellar enhanced ultrafiltration for the recovery of hydrophobic bioactive components with exo-signal role in rhizosphere, from the recirculated hydroponic media.

The usual processes of micellar enhanced ultrafiltration are also used for the removal of heavy metals (e.g. Cu, Li et al. 2006. Chemosphere, 63, 353-358) that bind to the hydrophilic side of anionic surfactants. In the hydroponic solutions, a series of this kind of heavy metals, e.g. Zn or Cu, are essential micro-elements for the achievement of plant development cycle (Hänsch and Mendel 2009. Current Opinion in Plant Biology, 12, 259-266), therefore the removal of these ions would significantly affect the quality of recovered hydroponic media. Moreover, the quality of the recirculated hydroponic media would be affected also by surfactants that are not included in micelles and that could pass through the ultrafiltration membrane. Therefore, it is necessary that the process of micellar enhanced ultrafiltration for the recovery of the hydrophobic bioactive components with exo-signal role in rhizosphere not to affect the quality of hydroponic media.

The technical problem that the invention solves is to prepare a plant biostimulant from the radicular exudates accumulated in the recirculated hydroponic media, through a process which does not affect the quality of such hydroponic media.

The plant biostimulant prepared from the root exudates accumulated in the recirculated hydroponic media of the greenhouse vegetables has a content of 0.25% non-ionic surfactants and hydrophobic bioactive components, selectively recovered from radicular exudate, by a micellar enhanced tangential ultrafiltration process, wherein the used micelle forming non-ionic amphiphilic structures are used also for the formulation of the recovered hydrophobic bioactive components.

Hydroponic cultivated greenhouse vegetables are tomatoes, cucumbers, peppers, lettuce.

The ultrafiltration process for selective recovery of bioactive components from hydroponic media subject to the process is done after addition of the amphiphilic non-ionic structures, in an effective amount to achieve critical micelar concentrations, preferably in the proportion 0.1%-0,5% of the recirculated hydroponic medium, pH adjustment on the suspension to 5.6 - 6.2 and suspension shaking sufficient time for the formation of micelles, generally for minimum 15 min, at room temperature, the tangential ultrafiltration of the resulting suspension, on an membrane with the cut-off threshold of 5-100 KDa, at a rate per minute representing 1% of the useful volume of the feeding vessel, and at a pressure difference of 140-170 kPa.

The retentate is concentrated till 5% dry matter and it is sterilized by a 0.2 µm membrane ultrafiltration, for further formulation as plant biostimulants.

The amphiphilic carrier structures are non-ionic structures of limited polarity: polyoxyethylene alkyl ether; triblock copolymers composed of a central hydrophobic chain of polyoxypropylene flanked by two hydrophilic chains of polyoxyethylene; selenium nanoparticles with a corona of microbial expansins, or combinations thereof.

The preferred polyoxyethylene alkyl ether prefers, which has a high capacity to bind bio-active hydrophobic components commonly present in the recirculated hydroponic media is polyoxyethylene ethyl ether (20), with a molecular mass of 1149 Daltons, and a hydrophilic-lipophilic balance (HLB) 15.3.

The preferred triblock copolymer is an amphiphilic structure that has a high capacity to bind bio-active hydrophobic components commonly present in the recirculated hydroponic media and it is a compound that has the molecular mass of 12.600 Daltons and a hydrophilic-lipophilic balance (HLB) of 22.

The preferred biogenic selenium nanoparticles, with a corona of microbial expansins, which have a high capacity to bind bio-active hydrophobic components, commonly present in the recirculated hydroponic media, are made by fungi which are producers of amphiphilic proteins, from various class of microbial expansins, cerato-platanins or swolenins, and have dimensions ranging from 75 to 120 nm, and a zeta potential -35 ± 7.2 mV.

The pH is adjusted by adding an appropriate compound, known by a specialist in the field. In general, pH adjustment is directed to the acidification.

The permeate resulted from tangential ultrafiltration is then processed according to known methods (Hosseinzadeh et al. 2017 the, Reviews in Environmental Science and Bio/Technology, 16, 59-79), in order to achieve detoxification and elimination of compounds that would favor the development of phytopathogenic microorganisms, as well as any molecules of surfactants that would have passed through the ultrafiltration membrane, and recirculated into the hydroponic environment.

The process according to the invention presents the following advantages:
✔ It could be integrated into plant cultivation technology on recirculated hydroponic media;
✔ It provides a selective recovery of the hydrophobic bioactive components, exo-signals in the plant rhizosphere, with a reduced contamination with hydrophilic compounds responsible for negative phenomena in the hydroponic culture media;
✔ It is easy to scale-up, because it involves the use of equipment that are available for processing different volumes of liquid;
✔ It does not interfere with the processes of elimination of hydrophilic components, generally organic acids, involved in the phenomena of self-toxicity and stimulation of the phytopathogenic microorganisms;
✔ It does not modify the quality and it does not contaminate the recycled hydroponic culture media, with products affecting the productivity of plants cultivated into such technological systems;
✔ It introduces a new category of materials useful for separation by micellar enhanced ultrafiltration, i.e. zero-valent selenium hydrophobic nanoparticles, formed by biosynthesis in the culture of the fungi that secrete important quantities of amphiphiles proteins, from microbial expansins category, the role of which as elicitor of the plant defense response is complementary to the hydrophobic bioactive components with the role of exo-signals (e.g., for cerato-platanins, the work Pazzagli et al. 2014 the, Plant Science, 228, 79-87);
✔ The formulation of hydrophobic bioactive components with an exo-signal role, as inclusions inside micelles, ensures reduced water access and it increases their stability, maintaining their biological activity for a longer period of time.

Further examples of invention embodiments are presented below.

*Example 1*. On a system of hydroponic cultivation Wilma XXL (Atami, Rosmalen, Holland), with 20 pots of 6 liters, and with a reservoir of 100 liters useful for culture media, tomatoes are grown on hydroponic technologies. On the tubes connecting the nutrient solution reservoir with hydroponic pots a tangential ultrafiltration system is inserted, consisting of 1 container of 8 liters (5 liters useful capacity), equipped with mechanical stirrer, which is the feeding vessel, 1 ultrafiltration module Biomax, with polysulfone membrane, having the cut-off threshold of 5 kDa and with an active area of 50 cm² (Merck Group, Darmstad, Germany), 1 receiving vessel for the retentate, of 1 liter useful, 1 receiving vessel for the permeate and a system of pumps for ultrafiltration Cogent M1 (Merck Group). The containers are connected by plastic tubes with the Biomax module. A distributor valve fitted with a rheometer connects the feeding container of the ultrafiltration system with the Wilma XXL system tank. The Cogent M1 pump system connects by plastic tubes with the Biomax modules. The receiving container for the permeate connects through a valve to a peristaltic pump Masterflex L/S (Cole Parmer, Vernon Hills, IL, US) with a maximum flow of 280 ml/min. The peristaltic pump feeds a chromatographic column with dimensions of 5 x 30 cm, packed with neutral resin Amberlite® XAD4 (The Dow DuPont, Midland, MI, USA), 20-60 Mesh, intended for the retention of unwanted components of radicular exudates, including possible non-integrated surfactant particles in the micelles and which could pass through the ultrafiltration membrane.

From the Wilma XXL system reservoir 5 liters are taken. In these 5 liters, 5 g of polyoxyethylene alkyl ether (20) (Brij® 98, Croda International, Snaith, United Kingdom) are added. The pH is adjusted to 5.6 value, with a solution 0.01 N HNO₃ and it is shaken for 15 min at room temperature, to facilitate the capture of the bioactive hydrophobic components, with exo-signals function, inside the micelles formed by polyoxyethylene alkyl ether. Then, the tangential ultrafiltration of the resulting suspension is done, by ultrafiltration on a 5 kDa cut-off polysulfone membrane, at a flow rate 50 ml/min with a pressure difference of 140 kPa. The permeate is taken-over with the peristaltic pump and is feed to the chromatographic column. The retentate is concentrated and focuses up to 7% dry matter (refractive index checked, with a digital refractometer HI 96801, Hanna Instruments, Cluj Napoca, Romania), by concentration on a rotary vacuum evaporator (Rotavapor ® R-300, Buchi, Flavil, Switzerland). It results about 5 ml of concentrate, which is sterilized by 0.2 µm membrane ultrafiltration. The sterile concentrated retentate, containing hydrophobic bioactive components, with the function of rhizosphere exo-signals, are mixed with 245 ml of 5% sterile solution of polyvinyl alcohol (Emprove® 4-88, Merck) in water, for the further utilization as a plant biostimulant.

In the resulted product the biological activity of bioactive hydrophobic components is determined, acting as exo-signals, as inducers of: growth of fungal mycorrhizae spores (Nagahashi and Douds, 1999. Biotechnology Techniques, 13, 893-897), germination of the seeds of parasitic plants and changes in the development pattern of plant pathogenic fungi, respectively *Fusarium graminearum* DSM 4527 (Oancea et al. 2017, Molecules, 22, 961). The works are done by using the technique of serials dilution, 1 by 1, and determining the maximum dilution to which the biological effect is still observed. There is no longer any biological activity after dilution of 1:256 to induce the germination of spores *Gigaspora margarita* and seeds of *Orobanche cumana* and of 1:8 in inducing the modification in the development pattern of plant pathogenic fungi.
*Example 2.* The process is the same as in Example 1, with the following differences. The cultivated plants are peppers. The used amphiphilic carrier is triblock copolymer with a molecular mass of 12,600 Daltons and with a hydrophilic-lipophilic balance (HLB) of 22, known also as the commercial name Pluronic® F127 (BASF, Ludwigshafen am Rhein, Germany), which is applied at a concentration of 0.5%. The pH is adjusted to the value of 6.0, and this value does not result in significant changes in the quality characteristics of the recirculated hydroponic media. The ultrafiltration membrane cut-off has limit of exclusion of 30 kDa, and the pressure difference is 170 KPa. In the resulted product the biological activity of bioactive hydrophobic components is determined, acting as exo-signals, as inducers of: growth of fungal mycorrhizae spores (Nagahashi and Douds, 1999. Biotechnology Techniques, 13, 893-897), germination of the seeds of parasitic plants and changes in the development pattern of phytopathogenic fungi, respectively F. *graminearum* DSM 4527 (Oancea et al. 2017, Molecules, 22, 961). The works are done by using the technique of serials dilution, 1 by 1 and determination of the dilution to which the biological effect is still observed. There is no longer any biological activity after dilution of 1:512 to induce the germination of spores *G. margarita,* of 1:256 to induce the germination of *O. cumana* seeds and of 1:8 in inducing the modification in the development pattern of plant pathogenic fungi.
*Example 3.* The process is the same as in Ex. 1, with the following differences. The plants are cucumbers. The amphiphilic carrier used is represented by the biogenic selenium nanoparticles, with a corona of microbial expansins, applied at a concentration of 0.3%. The pH is adjusted to the value of 6.0, and this value does not result in significant changes in the quality characteristics of the recirculated hydroponic media. The ultrafiltration membrane has cut-off threshold of 100 kDa, and the pressure difference is 150 kPa. Biogenic selenium nanoparticles with a corona of microbial expansine are biosynthesized by fungi producers of amphiphilic proteins from microbial expansins class, cerato-platanine or swolenins.

Examples of fungi that synthesize selenium nanoparticles with the corona of expansins are: *Trichoderma harzianum* Td50b, deposited with deposit number NCAIM (P) F 001412, at National Collection of Agricultural and Industrial Microorganisms, Corvinus University of Budapest, Hungary, which produce cerato-platanins; strain *Trichoderma asperellum* Td36b, deposit under number P (F) 001434 at National Collection of Agricultural and Industrial Microorganisms (NCAIM) Budapest, producing swolenins; strain *Trichoderma* spp. T27, which is producing microbial expansins. The strains are cultivated on the potato-glucose broth, with the addition of 1 mM of sodium selenite, for 5 days at the temperature of 28°C, on rotary shaker at 70 rpm. After 5 days the resulting nanoparticles are separated, at a relative centrifugal force of 2500 x G. The dimensions of the formed nanoparticles are between 75-120 nm and the Zeta potential is -35 ± 7.2 MV.

In the resulted product the biological activity of bioactive hydrophobic components is determined, acting as exo-signals, as inducers of: growth of fungal mycorrhizae spores (Nagahashi and Douds, 1999. Biotechnology Techniques, 13, 893-897), germination of the seeds of parasitic plants and changes in the development pattern of plant pathogenic fungi, respectively *F*. *graminearum* DSM 4527 (Oancea et al. 2017, Molecules, 22, 961). The works are done by using the technique of serials dilution, 1 by 1, and determination of the maximum dilution to which the biological effects are still observed. There is no longer any biological activity after dilution of 1:256 to induce the germination of spores *G. margarita* and seeds of O. *cumana* and of 1:16 in inducing the modification in the development pattern of plant pathogenic fungi.
*Example 4.* The process is the same as in Ex. 1, with the following differences. The works are done with a molar mixture of triblock copolymer with a molecular mass of 12,600 Daltons and a hydrophilic-lipophilic balance (HLB) of 22 - Ethyl ether of polyoxyethylene (20), applied at concentration of 0.3%.
*Example 5.* The process is the same as in Ex. 1, with the following differences. It works with lettuce plants and a mixture of ethyl ether of polyoxyethylene (20) and selenium nanoparticles, applied at the concentration of 0.1% and 0.3% respectively.
*Example 6.* Compositions according to Ex. 1 - 3 were tested in greenhouse conditions, on tomatoes plant. Plants of tomatoes (*Lycopersicum esculentum* cv. Menhir F1), 60 days transplants, were re-potted into pots of 25 cm diameter and 50 cm height, wherein were introduced 5 liters of growing substrate, enriched with plant nutrients for the first weeks of vegetation (Canna Terra Professional Plus, Canna International BV, Oosterhout, Netherlands). Pots were kept in a greenhouse, at 22 ±2°C during the day and 17± 2°C during the night, with 12 hours photoperiod, supplemented with light intensity of 160 mcE/m²/s, derived from the halide lamps, when light intensity decreased below 500 mcE/m² threshold. Experiment was running for 56 days. The substrate contained reserves of nutrients, so the plants were fertilized only once, after 28 days from re-potting, by applying 100 ml of nutrient solution, 1 g/l of fertilizer 20-8-20 (N-P₂O₅-K₂O TimacAgro Eurofertil, Romania). The experiment was conducted in randomized blocks, with 4 repetitions for each treatment, every repetition including five plants. Tested experimental treatments included control, treated with water, hydric stressed and not-stressed, and one reference product. The reference product was prepared by extracting 50 liters of medium from hydroponic cultivation of tomatoes, with ethyl acetate, according to the method described by (Xie, et al. 2019, Phytochemistry, 157, 200-205). The ethyl acetate extracts were evaporated till dry, the residue was resumed in 5 ml of hexane containing 1% polysorbate 20 (polyoxyethylene monolaurate, Tween 20). The hexane solution was emulsified in 5% polyvinyl alcohol solution in water, in a ratio of 1 g to 49 grams. Before to be applied, the products according to example 1-3 and the reference product were diluted 10 times with the tap water.

The experimental treatments were:
V₁ - control, water not-stressed, treated with tape water; 2 treatments x 10 ml per pot, equivalent to 500 I/ha;
V₂ - control, water stressed, treated with tape water, 2 treatments x 10 ml per pot, equivalent 500 I/ha;
V₃ - water not-stressed, treated with the reference extract, 2 treatments x 10 ml solution of 0.2% per plant, equiv. 1 liters in 500 I/ha;
V₄ - water stressed, treated with the reference extract, 2 treatments x 10 ml solution of 0.2% per plant, equiv. 1 liters in 500 I/ha;
V₅ - water not-stressed, treated with product according Ex. 1, 2 treatments x 10 ml solution of 0.2% per plant, equiv. 1 liters in 500 I/ha;
V₆ - water stressed, treated with product according Ex. 1, 2 treatments x 10 ml solution of 0.2% per plant, equiv. 1 liters in 500 I/ha;
V₇ - water not-stressed, treated with product according Ex. 2, 2 treatments x 10 ml solution of 0.2% per plant, equiv. 1 liters in 500 I/ha;
V₅ - water stressed, treated with product according Ex. 2, 2 treatments x 10 ml solution of 0.2% per plant, equiv. 1 liters in 500 I/ha;
V₉ - water not-stressed, treated with product according Ex. 3, 2 treatments x 10 ml solution of 0.2% per plant, equiv. 1 liters in 500 I/ha;
V₁₀ - water stressed, treated with product according Ex. 3, 2 treatments x 10 ml solution of 0.2% per plant, equiv. 1 liters in 500 l/ha;

The treatments were applied in 2^{nd} and 29^{th} days after transplantation, by spraying each plant with a glass atomizer with metallic top and plastisol bulb (model 15-RD, DeVilbiss Healthcare, Somerset, PA, USA).Water not-stressed was watered once every five days at 100% field capacity, and the water stressed treatments were watered every two weeks at 100% field capacity. At the end of the 8 weeks since transplanting, the experiment was terminated, and the morphological parameters of plants, plant height, root length, number of leaves and the leaf surface, and ripe fruits per plant, were determined. The data were processed by analysis of variance (Statistica 10, StatSoft, Tulsa, OK, USA).

The results are presented in the below table 1. Compositions according to invention stimulate the growth of the plants and improve the tomatoes plants resistance to water stress.

**Tab. 1. Influence of treatments with compositions made in accordance with the invention of the tomatoes plants, hydric stressed and hydric not-stressed*.**

| Experimental treatment | Plant height (cm) | Root length (cm) | Leaf number | Leaf area (mm²) | Average production * (g/plant ripe fruit) |
|---|---|---|---|---|---|
| V₁ - control, water not -stressed | 51.23±2.42b | 54.27±1.24b | 28.00±4.5b | 642.73±18.45b | 314±32.8b |
| V₂ - control, water stressed | 38.22±4.24c | 34.63±5.45c | 21.50±2c | 507.05±22.82c | 174±47.8c |
| V₃ -water not-stressed, treated with the reference extract | 53.46±3.94b | 56.82±2.53b | 27.50±4.5b | 684.38±27.52b | 327±42.6b |
| V₄ - water stressed, treated with the reference extract | 40.22±5.48c | 43.67±6.52c | 22.50±1.5c | 517.74±24.38c | 182±52.7c |
| V₅ - water not-stressed, treated with product according Ex. 1 | 57.56±1.92ab | 53.52±3.84b | 29.50±1.5b | 649.21 ±32.97b | 324±18.9b |
| V₆ - water stressed, treated with product according Ex. 1 | 44.50±4.82b | 42.94±2.28b | 28.00±2.5b | 527.61±32.42c | 209±54.8bc |
| V₇ - water not-stressed, treated with product according Ex. 2 | 54.78±5.94b | 52.84±3.92b | 30.00±2.5b | 624.82±12.75b | 323±48.4b |
| V₈ - water stressed, treated with product according Ex. 2 | 43.24±4.96b | 50.07±1.75b | 30.5±3.5b | 603.16±25.84bc | 318±37.4b |
| V₉ - water not-stressed, treated with product according Ex. 3 | 62.52±3.49a | 57.85±1.34a | 34.50±3.5a | 700.85±15.94a | 383±34.8a |
| V₁₀ - water stressed, treated with product according Ex. 3 | 54.0±5.24b | 54.60±3.27b | 32.5±2.5ab | 641.16±27.28b | 327±29.5b |

| | | | | | |
|---|---|---|---|---|---|
| * The values are followed by the same letter does not differ significantly P > 0.05; ** production per 30 days cycle of flowering / fructification. | | | | | |

The compositions according to Ex. 1-3 have a plant biostimulant activity, determining a reduction in the effects of the water stress on tomato plants. The activity is superior to the product obtained by chemical extraction, used as a reference, and the use of selenium nanoparticles has an obvious synergic effect. Selenium improves plant tolerance to the water stress. (Ahmad et al. 2016. Journal of the Science of Food and Agriculture, 96, 372-380), and selenium nanoparticles have a superior effect, due most probably to the slow release of the biologic active chemical species (El-Ramady et al. 2016. Environmental Chemistry Letters, 14, 123-147).

## Claims

1. Plant biostimulant obtained from root exudates accumulated in recirculated hydroponic media according to the invention, **characterized in that** it is obtained from the cultivation media of some greenhouse vegetables cultivated hydroponically, and that it has a content of 0.25% non-ionic surfactants and hydrophobic bioactive components, selectively recovered from root exudates based on a micellar enhanced tangential ultrafiltration process, in which the non-ionic amphiphilic structures have also a formulation role of the recovered hydrophobic bioactive components.

2. Plant biostimulant obtained from root exudates accumulated in recirculated hydroponic media according to claim 1, **characterized in that** the greenhouse vegetables cultivated hydroponically are tomatoes, cucumber, pepper, lettuce.

3. Plant biostimulant obtained from root exudates accumulated in recirculated hydroponic media according to claim 1, **characterized in that** the ultrafiltration process for selective recovery of bioactive components from the hydroponic media subject to the process is realized by adding the non-ionic amphiphilic structure in an efficient quantity to reach the critical micellar concentration, preferentially 0.1% - 0.7% of the mass of recirculated hydroponic media, pH adjustment of suspension at values of 5.6 - 6.2 and shaking the suspension long enough to form the micelles, in general a period of minimum 15 minutes, at room temperature, tangential ultrafiltration of resulted suspension, on a membrane with cut-off threshold of 5-100 kDa, at a debit per minute which represents 1% of useful volume of feeding vessel, and a pressure difference of 140-170 kPa.

4. Plant biostimulant obtained from root exudates accumulated in recirculated hydroponic media according to claim 1, **characterized in that** the retentate resulted by ultrafiltration is concentrated up to 5% of dry substance weight and sterilized by ultrafiltration on 0.2 µm membrane, for formulation in order to be used as plant biostimulant.

5. Plant biostimulant obtained from root exudates accumulated in recirculated hydroponic media according to claim 1, **characterized in that** the amphiphilic carrier structures are chosen between polyoxyethylene alkyl ether, triblock copolymer, formed from a central hydrophobic block of polypropylene glycol, flanked by two hydrophilic blocks of polyethylene glycol, selenium nanoparticles with a corona of microbial expansins, or combinations thereof.

6. Plant biostimulant obtained from root exudates accumulated in recirculated hydroponic media according to claim 1, **characterized in that** the preferred amphiphilic carrier structure of polyoxyethylene alkyl ether is polyoxyethylene ethyl ether (20), with a molecular mass of 1149 Daltons, and a hydrophilic-lipophilic balance (HLB) of 15.3.

7. Plant biostimulant obtained from root exudates accumulated in recirculated hydroponic media according to claim 1, **characterized in that** the preferred amphiphilic carrier structure of triblock copolymer has a molecular mass of 12,600 Daltons and a hydrophilic-lipophilic balance (HLB) of 22.

8. Plant biostimulant obtained from root exudates accumulated in recirculated hydroponic media according to claim 1, **characterized in that** the preferred amphiphilic carrier structure of biogenic selenium nanoparticles with a corona of microbial expansins are biosynthesized by fungi producing amphiphilic proteins of microbial expansins type, cerato-platanins and swolenins, and have dimensions between 75-120 nm and a zeta potential of -35 ±7.2 mV.
